Europäisches Patentamt

European Patent Office

Office européen des brevets

(19)

(11) Veröffentlichungsnummer : **0 386 193 B1**

(12) **EUROPÄISCHE PATENTSCHRIFT**

(45) Veröffentlichungstag der Patentschrift :
28.10.92 Patentblatt 92/44

(51) Int. Cl.⁵ : **F16J 15/40, F01D 11/00**

(21) Anmeldenummer : **89908804.1**

(22) Anmeldetag : **05.08.89**

(86) Internationale Anmeldenummer :
**PCT/DE89/00518**

(87) Internationale Veröffentlichungsnummer :
**WO 90/02896 22.03.90 Gazette 90/07**

(54) **DICHTUNGSEINRICHTUNG ZWISCHEN WELLE UND GEHÄUSE EINER STRÖMUNGSMASCHINE MIT MINDESTENS EINEM LAUFRAD.**

(30) Priorität : **08.09.88 DE 3830470**

(43) Veröffentlichungstag der Anmeldung :
**12.09.90 Patentblatt 90/37**

(45) Bekanntmachung des Hinweises auf die Patenterteilung :
**28.10.92 Patentblatt 92/44**

(84) Benannte Vertragsstaaten :
**CH FR GB LI**

(56) Entgegenhaltungen :
**BE-A- 531 064**
**BE-A- 654 646**

(56) Entgegenhaltungen :
**CH-A- 606 871**
**DE-A- 1 626 052**
**DE-C- 3 219 127**
**GB-A- 2 076 480**
**US-A- 2 956 825**
**US-A- 3 199 877**
**US-A- 4 384 724**

(73) Patentinhaber : **MTU MOTOREN- UND TURBINEN-UNION FRIEDRICHSHAFEN GMBH**
**Olgastrasse 75 Postfach 20 40**
**W-7990 Friedrichshafen 1 (DE)**

(72) Erfinder : **RUETZ, Georg**
**Widdum 2**
**W-7997 Immenstaad (DE)**

EP 0 386 193 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf eine Dichtungseinrichtung zwischen Welle und Gehäuse einer Strömungsmaschine mit mindestens einem Laufrad gemäß dem Oberbegriff des Patentanspruches 1.

Der Zweck einer derartigen Dichtungseinrichtung, bei der die sich in Umfangsrichtung nicht bewegenden Dichtringe in Verbindung mit der zugeordneten Ringnut in der rotierenden Welle eine Labyrinth-Dichtung ergeben, ist es, Schmierölverlust aus den Lagerstellen der Welle und den Übertritt von Fördermedium aus dem Laufradraum in die Lagerstellen zu verhindern.

Aus der DE-C-32 19 127 ist eine gattungsgemäße Dichtungseinrichtung bekannt, bei der der eine Dichtring durch den Druck im Sperrgasraum gegen die dem Laufrad abgewandte Seitenflanke seiner Ringnut gedrückt wird. Nach anfänglichem Verschleiß am Dichtring gegenüber der Ringnut-Seitenflanke wird der Dichtring gegen die rechtwinklige Abstufung in der Wellendurchführungsbohrung geschoben. Der Verschleiß am Dichtring kommt dadurch zum Stillstand.

Der den Sperrgasraum zum Laufradraum hin begrenzende Dichtring steht im Normalfall axial im Gleichgewicht zwischen dem Druck im Sperrgasraum und dem Druck im Laufradraum ohne Berührung einer der Seitenflanken der Ringnut, so daß kein Ringverschleiß auftritt.

Bei einer Fehlfunktion der Sperrgasversorgung wird der dem Laufradraum benachbarte Dichtring durch den im Laufradraum herrschenden Druck des Fördermediums axial zum Sperrgasraum verschoben und legt sich an die dem Laufradraum abgewandte Nutflanke der Ringnut an. Da ein axialer Anschlag für den Dichtring in der Wellendurchführungsbohrung fehlt, führt die Fehlfunktion der Sperrgasversorgung zu einem betriebsgefährdenden Verschleiß bis zum Totalverlust des Dichtringes.

Es ist deshalb Aufgabe der Erfindung, eine Dichtungseinrichtung zur Begrenzung eines Sperrgasraumes zwischen Welle und Gehäuse einer Strömungsmaschine zu schaffen, bei der ein betriebsgefährdender Verschleiß der Dichtringe vermieden wird, und die Unempfindlichkeit gegen eine Fehlfunktion der Sperrgasversorgung verbessert ist.

Diese Aufgabe wird erfindungsgemäß mit den kennzeichnenden Merkmalen des Patentanspruches 1 gelöst.

Die mit der Erfindung erzielten Vorteile bestehen insbesondere darin, daß auch der laufradseitige Dichtring an der Abstufung der Wellendurchführungsbohrung abstützbar und dadurch bei unzureichendem Sperrgasdruck vor betriebsgefährdendem Totalverschleiß geschützt ist, daß sich eine einfache Montage der Welle mit den eingesetzten Dichtringen ergibt, daß die Dichtungsvorrichtung eine verbesserte Unempfindlichkeit gegenüber wechselndem Sperrgasdruck aufweist, daß sich die identische Ausbildung der Dichtringe kostensenkend auf Beschaffung und Ersatzteilhaltung auswirkt und daß sich durch die für beide Dichtringe gemeinsame Ringnut die Zahl der zu bearbeitenden Nutflanken reduziert, was eine Senkung der Herstellungskosten für die Welle ergibt.

Aus der DE-A 16 26 052 ist noch eine gattungsähnliche Dichtungseinrichtung bekannt, bei der zwei axial wirkende Gleitringdichtungen eine mit einem Sperrmedium beaufschlagbare Sperrkammer begrenzen. Dieser Anordnung fehlt jedoch eine Vorrichtung, die bei Ausfall des Sperrmediums einen Totalverschleiß der Gleitringdichtungen verhindern könnte.

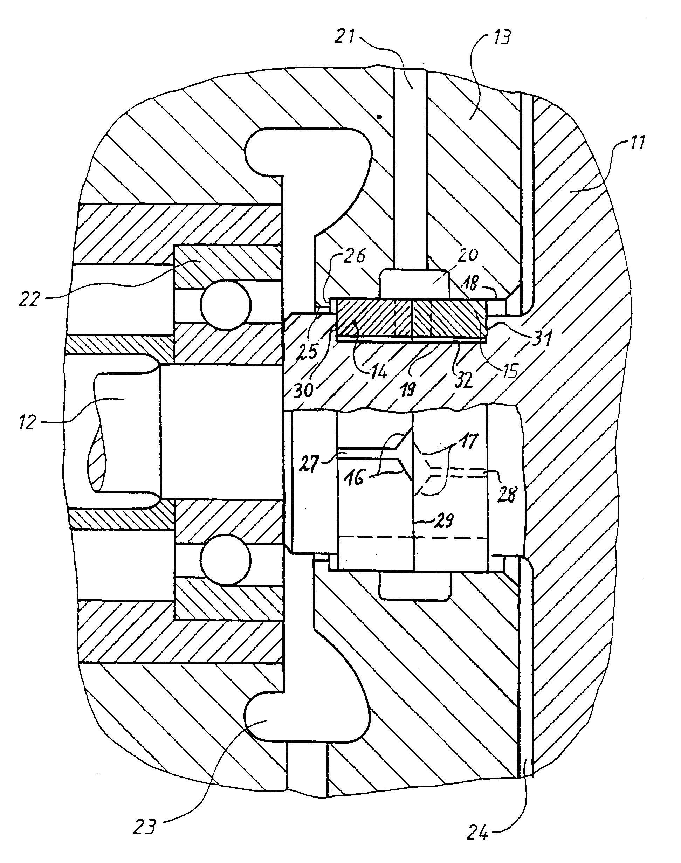

Ein Ausführungsbeispiel der Erfindung ist in der Zeichnung dargestellt und wird nachstehend näher beschrieben.

Eine Dichtungseinrichtung, die aus zwei Dichtstellen besteht, ist zwischen der ein Laufrad 11 tragenden Welle 12 und dem Gehäuse 13 einer nicht weiter dargestellten Strömungsmaschine angeordnet. Die Welle 12 läuft in ölgeschmierten Lagern 22. Die Dichtungseinrichtung verhindert Schmierölverlust aus dem Schmierölentlastungsraum 23 in den Laufradraum 24 und Übertritt von Fördermedium aus dem Laufradraum 24 in den Schmierölentlastungsraum 23. Für jede der Dichtstellen ist ein radial geschlitzter Dichtring 14, 15 mit rechteckigem Querschnitt angeordnet. Die nicht rotierenden Dichtringe 14, 15 liegen nach außen spannend mit ihrem Außenumfang in einer Wellendurchführungsbohrung 18 dichtend an und sind nebeneinanderliegend in einer gemeinsamen Ringnut 19 der Welle 12 geführt.

Die Dichtringe 14, 15 begrenzen einen als Umfangsnut der Wellendurchführungsbohrung 18 ausgebildeten Sperrgasverteilraum 20, der über einen Kanal 21 mit Sperrgas beaufschlagbar ist. Die zwischen den einander gegenüberliegenden Seitenflanken der Dichtringe 14, 15 vorhandene Fuge 29 ist etwa mittig zum Sperrgasverteilraum 20 angeordnet. An den Dichtringen 14, 15 ist auf ihren einander zugekehrten Seitenflanken jeweils eine radiale Nut 16, 17 ausgebildet, die den Zutritt von Sperrgas in den zwischen dem Innendurchmesser der Dichtringe 14, 15 und dem dem Nutgrunddurchmesser der Ringnut 19 angeordneten Sperrgasraum 32 gewährleistet.

Eine einfache Herstellung der radialen Nut 16, 17 an den Dichtringen 14, 15 ist durch Anfasung an den gegenüberliegenden radialen Kanten im Bereich der Stoßfuge 27, 28 erreichbar.

Der dem Schmierölentlastungsraum 23 benachbarte Dichtring 14 ist in der Wellendurchführungsbohrung 18 einer rechtwinkligen Abstufung 26 zu einem kleineren Durchmesser 25 hin zugeordnet. Zu Beginn der Betriebszeit der Strömungsmaschine, entsprechend der Darstellung in der Zeichnung, wird der Dichtring 14 durch den Druck des Sperrgases an der Nutflanke 30 der Ringnut 19 zur Anlage gebracht. Zwischen Dichtring 14 und Abstufung 25 besteht dann ein geringer axialer Abstand.

Nach anfänglichem Verschleiß am Dichtring 14 gegenüber der zugeordneten Nutflanke 30 der Ringnut 19 wird der Dichtring 14 gegen die rechtwinklige Abstufung 25 der Wellendurchführungsbohrung 18 geschoben. Durch diese axiale Abstützung kommt der Verschleiß des Dichtringes 14 zum Stillstand.

Der dem Laufradraum 24 benachbarte Dichtring 15 steht im Normalbetrieb der Strömungsmaschine im Gleichgewicht zwischen dem Sperrgasdruck und dem Druck des Fördermediums im Laufradraum 24. Ergibt sich durch eine Fehlfunktion der Sperrgasversorgung ein zu niedriger Sperrgasdruck, ist das axiale Gleichgewicht am Dichtring 15 gestört. Der nun überwiegende Druck des Fördermediums im Laufradraum 24 verschiebt den Dichtring 15 axial gegen den Dichtring 14. Wenn der Dichtring 14 noch nicht an der Abstufung 26 anliegt, setzt am Dichtring 14 Verschleiß gegenüber der Nutflanke 30 der Ringnut 19 ein. Sobald der Verschleiß am Dichtring 14 das Differenzmaß zwischen der Nutflanke 30 der Ringnut 19 und der rechtwinkligen Abstufung 26 erreicht, sind beide Dichtringe 14, 15 an der Abstufung 26 axial abgestützt. Ein weiterer Verschleiß der Dichtringe 14, 15 tritt dann nicht mehr auf.

**Patentansprüche**

1. Dichtungseinrichtung zwischen Welle (12) und Gehäuse (13) einer Strömungsmaschine mit mindestens einem Laufrad (11) bestehend aus zwei mit axialem Abstand voneinander angeordneten Dichtstellen, die einen mit Sperrgas beaufschlagbaren Sperrgasraum (32) begrenzen und für jede Dichtstelle ein in eine Ringnut (19) der Welle (12) eingesetzter, radial dichtend gegen die Wellendurchführungsbohrung (18) anliegender Dichtring (14, 15) angeordnet ist, der sich nicht mitdreht, wobei die Wellendurchführungsbohrung (18) auf der dem Laufrad (11) abgewandten Seite des einen Dichtringes (14) mit einer rechtwinkligen Abstufung (26) zu einem kleinen Durchmesser (25) ausgebildet ist, und der eine Dichtring (14) zu Beginn der Betriebszeit der Strömungsmaschine, bei Anlage an der dem Laufrad (11) abgewandten Seitenflanke (30) der Ringnut (19), einen geringen axialen Abstand von der Abstufung (26) aufweist, dadurch gekennzeichnet, daß die beiden Dichtringe (14, 15) nebeneinander in einer gemeinsamen Ringnut (19) der Welle (12) angeordnet sind, daß an den Dichtringen (14, 15) auf ihren einander zugekehrten Seitenflanken jeweils mindestens eine radiale Nut (16, 17) ausgebildet ist und daß die Fuge(29) zwischen den einander gegenüberliegenden Seitenflanken der Dichtringe (14, 15) etwa mittig zu einer den Sperrgasverteilraum (20) bildenden Umfangsnut in der Wellendurchführungsbohrung (18) angeordnet ist.

2. Dichtungseinrichtung nach Anspruch 1, dadurch gekennzeichnet, daß die radiale Nut (16, 17) durch Anfasung der radialen, gegenüberliegenden Kanten des radial geschlitzten Dichtringes (14, 15) im Bereich der Stoßfuge (27, 28) gebildet wird.

**Claims**

1. A sealing device between the shaft (12) and housing (13) of a turbo-machine having at least one rotor (11), comprising two sealing points which are arranged at an axial distance apart and which delimit a gas barrier chamber (32), to which barrier gas can be admitted, and for each sealing point there is provided a sealing ring (14, 15) which is inserted in an annular groove (19) of the shaft (12), which is applied radially and fluidtightly against the shaft passage bore (18) and which does not rotate therewith, wherein on that side of the sealing ring (14) remote from the rotor (11) the shaft passage bore (18) is formed with a rectangular stepped portion (26) down to a small diameter (25), and at the start of the operating period of the turbo-machine, with the sealing ring (14) being applied against the lateral flank (30) of the annular groove (19) remote from the rotor (11), it has a small axial distance from the stepped portion (26), characterised in that the two sealing rings (14, 15) are disposed side by side in a common annular groove (19) of the shaft (12, in that at least one radial groove (16, 17) is formed in the respective sealing rings (14, 15) on the mutually facing lateral flanks, and in that the joint (29) between the opposing lateral flanks of the sealing rings (14, 15) is disposed approximately centrally to a peripheral groove in the shaft passage bore (18) forming the gas barrier distribution chamber (20).

2. A sealing device according to Claim 1, characterised in that the radial groove (16, 17) is formed by chamfering the radial, opposing edges of the radially slotted sealing ring (14, 15) in the vicinity of the butt joint (27, 28).

**Revendications**

1. Dispositif d'étanchéité entre l'arbre (12) et le corps (13) d'une turbomachine comportant au moins une roue (11) à aubes, comprenant deux emplacements d'étanchéité qui sont disposés à une certaine distance axiale l'un de l'autre, qui délimitent une chambre (20) de gaz d'arrêt alimentée en ce gaz et qui comportent chacun une bague (14, 15) de joint d'étanchéité logée dans une gorge annulaire (19) de l'arbre (12), appliquée hermétiquement, radialement, contre l'alésage (18) de passage de cet arbre et ne tournant pas, cet alésage (18) comportant, du côté de la bague (14) de joint éloignée de la roue (11) à aubes, un épaulement perpendiculaire (26), qui lui donne un diamètre (25) plus faible et cette bague (14), appliquée au début de la période de fonctionnement de la turbomachine contre le flanc (30) de la gorge annulaire (19) éloigné de la roue (11) à aubes, étant à une faible distance de l'épaulement (26), (dispositif) caractérisé en ce que les deux bagues (14, 15) sont disposées côte à côte dans une gorge annulaire (19) commune de l'arbre (12), en ce qu'une encoche radiale (16, 17) au moins est formée dans chacun des flancs adjacents de ces bagues (14, 15) et en ce que le joint (29) séparant ces flancs qui se font face desdites bagues (14, 15) est disposé sensiblement au milieu d'une gorge de la périphérie de l'alésage (18) de passage de l'arbre, gorge qui constitue la chambre (20) de répartition du gaz d'arrêt.

2. Dispositif d'étanchéité selon la revendication 1, caractérisé en ce que l'encoche radiale (16, 17) est formée par biseautage des arêtes radiales, qui se font face, de chacune des bagues (14, 15) de joint, fendues radialement, à l'emplacement du joint (27, 28) de bout qui sépare les extrémités adjacentes de chacune de ces bagues.